# EUROPEAN PATENT SPECIFICATION

(11) **EP 1 798 646 B1**
(45) Date of publication and mention of the grant of the patent: **18.04.2018**
(21) Application number: 06122464.8
(22) Date of filing: 17.10.2006
(51) Int. Cl.: G06F 17/30, H04L 29/08

(54) **Mobile content management apparatus**
Managementapparat für mobile Inhalte
Appareillage de gestion du contenu mobile

(30) Priority: 02.12.2005 KR 20050117217
(43) Date of publication of application: 20.06.2007
(73) Proprietor: Samsung Electronics Co., Ltd., Suwon-si, Gyeonggi-do, 443-742 (KR)
(72) Inventor: Kim, Gyu-baek, Giheung-gu, Gyeonggi-do Yongin-si (KR); Lee, Nam-geol, Gangnam-gu, Seoul (KR); Kim, Hyung-chan, 2-dong, Gyeonggi-do, Yongin-si (KR)
(74) Representative: Appleyard Lees IP LLP

(56) References cited:
- EP-A- 1 583 004
- WO-A2-2005/010701
- GB-A- 2 376 326
- US-A1- 2004 015 514
- KUNZE DUBLIN CORE METADATA UNIVERSITY OF CALIFORNIA OFFICE OF THE PRESIDENT J: "The Dublin Core Metadata Element Set" IETF STANDARD-WORKING-DRAFT, INTERNET ENGINEERING TASK FORCE, IETF, CH, no. 3, 16 July 2005 (2005-07-16), XP015040496 ISSN: 0000-0004

## Description

The present invention relates to a mobile content management apparatus, and more particularly, to a mobile content management apparatus providing content to a wireless communication terminal through a wireless communication network.

Various mobile communication terminals such as cellular phones, personal digital assistants (PDAs), DMB phones, or the like have been developed with the development of wireless communication technology. In parallel, various wireless communication services have been developed and deployed. In particular, wireless Internet services used by wireless terminals through wireless communication networks have been developed. Thus, mobile content services providing content which is driven in the wireless terminals, for example, ring tone sound files supporting ring tones for wireless communication terminals, image files, moving picture files, music files, game files, and the like, have been developed.

In the process of using a mobile content service in a wireless terminal, the wireless terminal accesses a content service apparatus providing a content service through a wireless communication network and then downloads items of specific content from the content service apparatus.

The content service apparatus stores an item file for providing the items and metadata for managing mobile content to provide a mobile content service.

The metadata is structured to describe specific data and is variously used for systematic management of data and offers of various services using data.

The metadata is standardized according to each specific field such as Internet content, Internet text information, online book information, multimedia, and the like so as to be variously applied and shared. Table 1 below shows the standards of the metadata in the specific fields.

**[Table 1]**

| Field | Standard | Description |
|---|---|---|
| Internet Contents | Dublin Core | Metadata standards describing data on a network. |
| Internet Text Information | RSS (Really Simple Syndication) | Standards for sharing extensible Markup Language (XML)-based Content that are frequently updated such as a blog or news and include text information. |
| Bibliography Information | MARC (Machine Readable Record Cataloging) | Record format set based on library centered list. |
| Music/Photograph/Video | MPV (Music Photo Video) | Metadata standards established by OSTA (Optical Storage Technology Association) for |
| | | exchanges among digital music/photo/video content. |
| Multimedia | MPEG (Motion Picture Expert Group)-7 | Multimedia content standards for searching multimedia |
| ... | ... | ... |

As shown in Table 1, the standards of the metadata are formed according to the each specific field and define fundamental formats describing data on a network. The standardization of the metadata is very important for the sharing of information and the compatibility of data. However, metadata standards for mobile content do not exist. Also, mobile content service providers respectively define different metadata standards to provide mobile content. Thus, it is difficult to share information and allow data to be compatible.

In particular, metadata provides information for selecting items in a mobile content service to a wireless terminal user and constitues data for systematically managing the items. Thus, the metadata is necessary for diversifying services and improving the quality of the service.

However, the metadata standards used by the mobile contents service providers are designed so as to secure various types of metadata. Thus, a mobile content service specified in consideration of the characteristics of a user cannot be provided. Also, a linking service between related mobile contents cannot be provided. As a result, the quality of the services suffers.

US 2004/0015514 discloses a mobile content management apparatus using Dublin core metadata.

Accordingly, the present general inventive concept has been made to solve the above-mentioned and/or problems, and an aspect of the present general inventive concept is to provide a mobile content management apparatus capable of improving service quality.

According to the present invention there is provided an apparatus and method as set forth in the appended claims. Preferred features of the invention will be apparent from the dependent claims, and the description which follows.

According to an aspect of the present invention, there is provided a mobile contents management apparatus including: a data storage for storing first meta information comprising metadata defining general attributes of mobile content, second meta information including metadata defining unique attributes of each of the different types of mobile content, and third meta information including metadata related to statistics of the mobile content and metadata indicating linkage relationships among the different types of mobile content; and a controller for providing a user interface for inputting metadata for forming the first through third meta information so as to register the mobile content and storing the metadata input through the user interface in the data storage.

The first meta information may include contents ID (identifier) information for identifying each of the mobile contents, name information of the mobile content, type information of the mobile content, category information of the mobile content, language information indicating a language supported in the mobile content, and promotion information for linking the mobile content to different types of related mobile content.

The first meta information may include metadata defining general attributes of Internet content established by Dublin Core.

The second meta information may include: type general information including metadata indicating general attributes according to types of mobile content; physical attribute information including meta information indicating physical attributes of the mobile content; type individual information including metadata indicating unique attributes according to the types of the mobile content; and practical information including information as to protection, encryption, and usage fees of the mobile content.

The type general information may include information as to a name of each item constituting the mobile content, a brief description of each item, a type of data input as an input value of the each item, and a priority of the each item.

The physical attribute information may include the type of the mobile content, sizes of the mobile content, and physical position storing the mobile content.

The mobile content may include: audio content providing audio files; moving picture content providing moving picture files; image content providing image files; virtual machine content providing execution files operating in a VM (virtual machine); broadcasting content providing digital broadcasting services; and text content providing Internet text files.

The type individual information corresponding to the audio content may include information as to composers, artists, producers, lyrics, and mood of the audio contents.

The type individual information corresponding to the audio content may include metadata defined in the MPV (Music Photo Video) standards that are metadata standards established by OSTA (Optical Storage Technology Association (OSTA).

The type general information corresponding to the image contents may include MPV standards.

The physical attribute information corresponding to the moving picture content may be classified by qualities of the moving picture files.

The type individual information corresponding to the moving picture content may include information as to actors and producers of moving pictures, coding-related information of the moving pictures, and information indicating languages of the moving pictures.

The type individual information corresponding to the moving picture content may include metadata defined by MPV standards.

Type general information corresponding to the broadcasting content may include attribute information related to a broadcasting stream transmitted from a broadcasting station.

The type individual information corresponding to the VM content may include information as to a type and a version of the VM and specs of hardware and software the VM requires.

The type individual information corresponding to the VM content may include metadata defined by User Agent Profile standards established by OMA (Open Mobile Alliance).

Type individual information corresponding to the text content may include information as to titles and sources of Internet titles and languages that can be supported in the Internet texts.

The type individual information corresponding to the text contents may include metadata defined by RSS (RDF (Resource Description Framework) Site Summary) standards established by the W3C (World Wide Web Consortium).

The third meta information may include meta information indicating numbers of times the mobile content is downloaded and accessed.

The mobile contents management apparatus may further include a communicator for transmitting metadata corresponding to the mobile content, and the mobile content itself, through a wireless communication network to a wireless terminal.

The mobile content management apparatus may further include a meta information detector for generating the third meta information using the first and second meta information.

The data storage may further include indicating additional information added according to a request of a user of the mobile content.

For a better understanding of the invention, and to show how embodiments of the same may be carried into effect, reference will now be made, by way of example, to the accompanying diagrammatic drawings in which:
FIG. 1 is a block diagram of a mobile content management apparatus according to an embodiment of the present invention;
FIG. 2 is a block diagram of tables of a data storage shown in FIG. 1;
FIG. 3 is a block diagram of meta information stored in the data storage shown in FIG. 1;
FIG. 4 is a view illustrating a user interface screen provided by the mobile content management apparatus shown in FIG. 1 according to an embodiment of the present invention;
FIG. 5 is a flowchart of a process of providing mobile content according to an embodiment of the present invention; and
FIG. 6 is a view illustrating a ring tone download menu provided by the mobile content management apparatus shown in FIG. 1 according to an embodiment of the present invention.

Certain embodiments of the present invention will be described in greater detail with reference to the accompanying drawings.

In the following description, the same drawing reference numerals are used for the same elements throughout the drawings. The detailed constructions and elements described in the following description are provided only to assist in a comprehensive understanding of the invention. Thus, it is apparent that the present invention can be carried out without these specific constructions or elements. Also, well-known functions or constructions are not described in detail since they would obscure the invention in unnecessary detail.

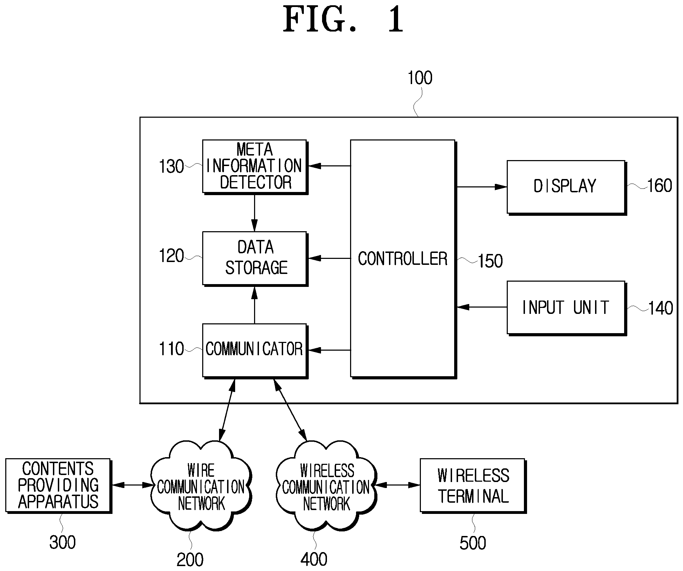

FIG. 1 is a block diagram of a mobile content management apparatus according to an embodiment of the present invention. Referring to FIG. 1, a mobile contents apparatus 100 includes a communicator 110, a data storage 120, a meta information detector 130, an input unit 140, a controller 150, and a display 160.

The communicator 110 is connected to a wired communication network 200 and a wireless communication network 400 to transmit data to and/or receive data from apparatuses connected to the wired communication network 200 and the wireless communication network 400. In other words, the communicator 110 transmits data to and/or receives data from a content providing apparatus 300.

Here, the content providing apparatus 300 provides various mobile content driven in the wireless terminal 500 such as a cellular phone or a digital satellite broadcast receiver (DMB). Examples of mobile content include audio content providing ring tone files or music files for the wireless terminal 500, moving picture content providing moving picture files such as movies or music videos, image content providing image files such as digital photos or pictures, virtual machine (VM) content providing software such as mobile games, broadcast content providing digital broadcast services, text content providing web news or the like, and so forth.

In the present embodiment, the communicator 110 is connected to the content providing apparatus 300 through the wired communication network 200 but may be connected to the content providing apparatus 300 through the wireless communication network 400. Although not shown, the communicator 110 may be connected to a plurality of content providing apparatuses.

The communicator 110 also transmits data and/or receives data from the wireless terminal 500 connected to the wireless communication network 400. In other words, the communicator 110 transmits the mobile content to the wireless terminal 500 through the wireless communication network 400.

The data storage 120 stores metadata corresponding to the data and the mobile content received from the communicator 110. The metadata may be provided by the content providing apparatus 300 or may be input through the input unit 140. If the metadata is provided by the content providing apparatus 300, the content providing apparatus 300 transmits the metadata to the communicator 110 through the wired communication network 200 or the wireless communication network 400, and the communicator 110 provides the metadata to the data storage 120.

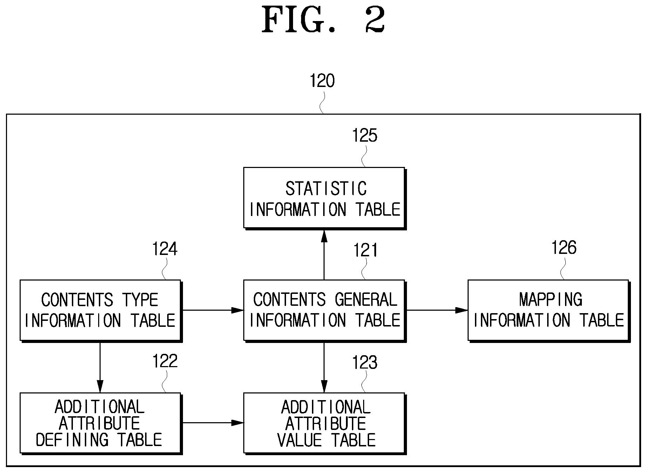

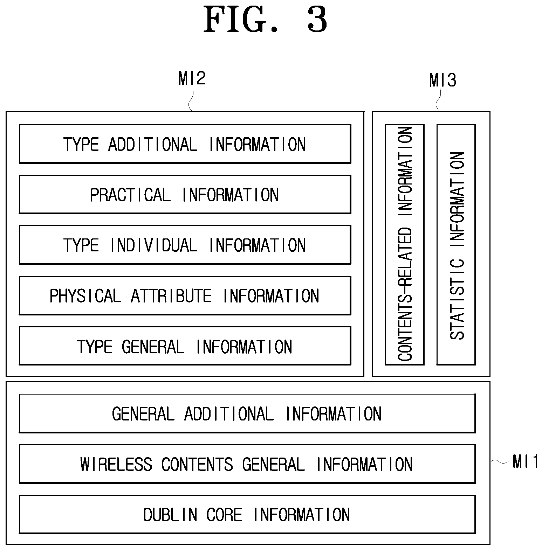

Table structures and data structures of the metadata stored in the data storage 120 will now be described with reference to FIGS. 2 and 3.

FIG. 2 is a block diagram of tables of the data storage 120 shown in FIG. 1, and FIG. 3 is a block diagram of meta information stored in the data storage 120 shown in FIG. 1. Referring to FIGS. 2 and 3, the data storage 120 includes a content general information table 121, first and second item information tables 122 and 123, a content type information table 124, a statistics information table 125, and a mapping information table 126 that respectively store metadata of the mobile content.

In the present embodiment, the data storage 120 includes six meta information tables. However, the number of tables of the data storage 120 may be increased or decreased with an attribute and an operation method for the metadata stored in the data storage 120.

As shown in FIG. 3, meta information stored in the data storage 120 includes first, second, and third meta information **MI1, MI2,** and **MI3.** In detail, the first meta information **MI1** includes commonly applied metadata regardless of the kind of mobile content, i.e., types of mobile content. In other words, the first meta information **MI1** includes metadata defining general attributes of mobile content. Here, the first meta information **MI1** is Dublin core information.

The first meta information **MI1** is stored in the content general information table 121. The first meta information MI1 includes the metadata defining the general attributes of the mobile content and the Dublin core information. Table 2 below shows an example of a structure of the content general information table 121.

**[Table 2]**

| First Meta Information | Table Field Name | Data Type | Metadata Attribute Value Corresponding to Field |
|---|---|---|---|
| | sContentId | VARCHAR2(24) | Content ID for Identifying Respective Content |
| | sContentName | NVARCHAR2(40) | Content Name |
| Mobile Content General Information | sContentType | VARCHAR2(24) | Field Indicating Types of Content |
| | sGeneralId | VARCHAR2(24) | Content Genre |
| | sCategoryId | VARCHAR2(24) | Category ID Indicating Classification System of Content |
| | sMimeType | VARCHAR2(50) | Multipurpose Internet Mail Extention (MIME) Types Indicating Types of Multimedia Documents for Exchanging Internet Mail |
| | sContent Size | VARCHAR2(20) | Size of Content File |
| | sStatus | CHAR(1) | Approval Status |
| | sCpId | VARCHAR2(24) | ID of Content Provider Providing Content |
| | sRegister | VARCHAR2(24) | Content Register |
| | sPrice | VARCHAR2(20) | Basic Price of Content |
| | sBillingRate | VARCHAR2(10) | Billing Rate for Allocating Content Incomes |
| | sDesc | NVARCHAR2(200) | Brief Description of Content |
| | sDetailInfoUrl | NVARCHAR2(100) | Internet Address (URL) Storing Detailed Information as to Content |
| | dRegDate | DATE | Registration Date of Content |
| | sLangCode | VARCHAR2(20) | Language Code Indicating Language Forming Content |
| | sPromotion | CHAR(1) | Designation of Linkage to Other Content Related to Content |
| | dExpireDate | DATE | Designation of Expiration Date of Content |
| | iTargetAge | DECIMAL(3) | Information as to Target Customers of Content |
| | ... | ... | ... |

**[Table 3]**

| First Meta Information | Table Name | Data Type | Metadata Attribute Value Corresponding to Field |
|---|---|---|---|
| Dublin Core Information | sCreator | VARCHAR2(24) | Creator Creating Content |
| | sPublisher | VARCHAR2(24) | Publisher Publishing Content |
| | sContributor | VARCHAR2(24) | Contributor Contributing Content |
| | sRight | NVARCHAR2(200) | Rights of Content |
| | sCoverage | NVARCHAR2(201) | Geographical, Temporal Features |
| | sFormat | VARCHAR2(100) | Information as to Physical Formats of Content |
| | sSource | VARCHAR2(100) | Information as to Sources of Content |
| | sSubject | VARCHAR2(100) | Information Indicating Subjects or Keywords of Content |
| | sAudience | VARCHAR2(100) | Information Indicating Main Audience |
| | sAvailable | CHAR(1) | Information as to Available Content |
| | dCreateDate | DATE | Create Date of Content |
| | dModifyDate | DATE | Modification Date of Content |
| | dAcceptDate | DATE | Acceptance Date of Content |
| | sLevel | DECIMAL(5) | Information as to Academic Background Levels of Content Users |
| | sVersion | VARCHAR2(20) | Information as to Versions of Content |
| | sAccessRight | NVARCHAR2(200) | Information as to Access Rights of Customers of Content |
| | sLicense | NVARCHAR2(200) | License Terms Indicating Licenses of Content |
| | sValid | CHAR(1) | Validity of Content |
| | ... | ... | ... |
| General Additional Information | ... | ... | ... |

Referring to Tables 2 and 3, the first meta information MI1 includes mobile content general information, Dublin core information, and general additional information.
The mobile content general information includes metadata defining attributes of general mobile content. In detail, the mobile content general information includes metadata indicating content identifiers (IDs) for identifying respective content, names of mobile content, types of mobile content, genres of mobile content, content category IDs indicating a classification system of mobile content, MIME types indicating types of Internet documents constituting mobile content, file sizes of mobile content, approval of mobile content, IDs of content providers providing mobile content, registers of mobile content, usage price of mobile content, billing rate of incomes from content, brief description of mobile content, Internet addresses providing detailed information as to mobile content, registration dates of mobile content, language forming mobile content, linkage to other content related to mobile content, expiration dates of mobile content, information as to target customers of content, and the like.

Here, the mobile content IDs refer to IDs uniquely allocated according to respective items of the respective mobile content. Thus, a field "sContentID" storing the mobile content IDs may be set using a primary key (PK) identifying each record of the content general information table 121.

In particular, a field "sPromotion" indicates whether selected mobile content is linked to other related mobile content. Thus, the mobile content management apparatus 100 may provide a service linking related mobile content using metadata stored in the field "sPromotion." For example, if a user selects a song of a specific singer during the use of audio content, the mobile content management apparatus 100 links moving picture content to audio content so as to download a music video file corresponding to the selected song.

As described above, the mobile content management apparatus 100 may provide mobile content as well as related mobile content. Thus, since a user does not need to separately search for different types of related mobile content, the mobile content management apparatus 100 can improve convenience to the user. Also, since a synergistic effect among the different types of related mobile content is expected, the mobile content management apparatus 100 can maximize the creation of profits related to the mobile content.

The Dublin core information includes metadata on general attributes of content defined by Dublin core standards and is mainly used for common attributes in various metadata standards that are currently proclaimed. In detail, the Dublin core information includes metadata indicating creators of content, publishers publishing content, contributors contributing content, rights related to content geographical and/or temporal features of content, information as to physical formats of content, information as to content sources, information indicating subjects or keywords of content, target customers of mobile content, availability of current mobile content, creation dates of mobile content, modification dates of mobile content, approval dates of mobile content, information as to academic levels of customer using mobile content, version information of mobile content, information as to rights of available customers of mobile content, license terms indicating licenses of mobile content, and validity of mobile content.

The general additional information includes metadata added according to requests of customers using mobile content or content providers providing mobile content in addition to the metadata of the Dublin core information and the mobile content general information. Here, the general additional information is metadata that is commonly applied regardless of type of mobile content.

As described above, the content general information table 121 includes the first meta information **MI1** defining the general attributes of the mobile content. In particular, the first meta information **MI1** includes various types of metadata necessary for mobile content besides generally used Dublin core information. Thus, the mobile content management apparatus 100 can provide various content services and thus improve service quality. The mobile content management apparatus 100 can calculate various types of statistical data related to the mobile content using the first meta information **MI1** and thus generate detailed statistical data and accurately grasp business possibilities.

In particular, since the first meta information **MI1** includes metadata indicating linkages among different types of related mobile content, the mobile content management apparatus 100 can improve the convenience of the user and synergy among related mobile content.

The second meta information **MI2** includes metadata defining attributes of mobile content according to type of mobile content. The second meta information **MI2** includes type general information including metadata indicating general attributes depending on type of mobile content, physical attribute information including metadata indicating physical attributes of content files, type individual information including metadata indicating unique attributes depending on type of mobile content, practical information including metadata related to protection and usage fees of mobile content, and type additional information including metadata addable by requests of users and mobile content providers depending on type of mobile content.

The type general information, physical attribute information, and mobile content type information of the second meta information **MI2** is stored in the additional attribute defining table 122 and the additional attribute value table 123. In detail, the additional attribute defining table 122 defines fields storing type general information, physical attribute information, and mobile content type information as to each item of respective content. Thus, the additional attribute defining table 122 does not store a substantial value for each item, as these are stored in the additional attribute value table 123.

The additional attribute value table 123 has the same field structure as the additional attribute defining table 122 and generates fields according to the field structures of the additional attribute defining table 122. In other words, if the additional attribute defining table 122 generates the fields, the additional attribute value table 123 generates fields having the same structures as the fields generated by the additional attribute defining table 122. Thus, records of the additional attribute value table 123 can be dynamically managed, and thus data storage space can be minimized.

However, some fields of the additional attribute defining table 122 may not be generated by the additional attribute value table 123. For example, substantial data of the fields of the additional attribute defining table 122 corresponding to fields not generated by the additional attribute value table 123 may be stored in the additional attribute defining table 122.

The additional attribute defining table 122 includes fields for defining the second meta information **MI2** indicating basic information corresponding to items of mobile content and attributes of the mobile content according to the type of mobile content. Table 4 below shows an example of the structure of the fields of the additional attribute defining table 122.

**[Table 4]**

| Second Meta Information | Table Field Name | Data Type | Metadata Attribute Value Correspondin g to Field |
|---|---|---|---|
| Type General Information | sContentTy pe | VARCHAR2(24 ) | Content Type Indicating Type of Content |
| | sItemName | NVARCHAR2(5 0) | Item Name |
| | sDesc | NVARCHAR2(1 00) | Brief Description of Items |
| | sItemDataT ype | VARCHAR2(10 ) | Data Type Input as Input Values of Items |
| | iPriority | CHAR(18) | Item Priority |
| | sProperty | DECIMAL(5) | Information Indicating Whether Items are Additional Attributes Describing Content |
| | sLangCode | VARCHAR2(20 ) | Language Codes Indicating Languages of Items |
| | ... | ... | ... |

Table 4 above shows fields of the additional attribute defining table 122 that indicate type general information of the second meta information **MI2** and are commonly applied to each item regardless of type of mobile content. Referring to Table 4, the additional attribute defining table 122 defines metadata indicating content type indicating type of content, item names, brief descriptions of items, data types input as input values of items, item priority, information indicating whether items are additional attributes describing content, and language codes indicating languages of items.

Here, a field "sContentType" indicating content category IDs of the additional attribute defining table 122 can distinguish the records of the additional attribute defining table 122 and thus be set as a PK of the additional attribute defining table 122 together with other attributes.

The second meta information **MI2** and the field structures of the additional attribute defining table 122 applied depending on type of mobile content will now be described with reference to Tables below.

A portion of the metadata of the second meta information MI2 varies with type of mobile content. Table 5 below shows an example of the field structures of the additional attribute defining table 122 indicating the second meta information **MI2** of audio content.

**[Table 5]**

| Second Meta Information | Table Field Name | Data Type | Metadata Attribute Value Corresponding to Field |
|---|---|---|---|
| Physical Attribute Information | mmf | NVARCHAR2(100) | Physical Position of Audio File of mmf File Type |
| | mmf size | DECIMAL(10) | File Size |
| | mmf_poly | DECIMAL(10) | Indicate Number of Supported Chords of Audio |
| | mmf_sample | NVARCHAR2(100) | Physical Position of Short Audio File for Preview |
| | mmf_desc_image | NVARCHAR2(100) | Image File Path Related to Corresponding Song |
| | mal | NVARCHAR2(100) | Physical Position of Audio File of mal File Type |
| | mal_size | DECIMAL(10) | File Size |
| | mal_poly | DECIMAL(10) | Indicate Number of Supported Chords of Audio |
| | mal_sample | NVARCHAR2(100) | Physical Position of Short Audio File for Preview |
| | mal_desc_image | NVARCHAR2(100) | Image File Path Related to Corresponding Song |
| | ... | ... | ... |
| Type Individual Information | AlbumTitle | | Album Title Information Corresponding to Audio |
| | PrincipalArtist | | Audio Artist |
| | MusicBy | | Audio Composer |
| | LyricsBy | | Audio Lyric Writer |
| | ArrangedBy | | Audio Arranger |
| | ProducedBy | | Audio Producer |
| | EncodedBitrate | | Audio Bitrate Information |
| | PlayingTime | | Audio Playing Time |
| | TrackNumber | | Track Number of Album Storing Original File of Audio |
| | NumTracks | | Number of Tracks of Album |
| | SetNumber | | Audio Order |
| | NumSets | | Album Number Storing Original File of Audio |
| | PlayCount | | Number of Times Audio is Played |
| | Lyrics | | Audio Lyrics |
| | Mood | | Audio Genre (e.g., Ballad, Rock, and the like) |
| | Tempo | | Audio Tempo (e.g., slow, fast, and the like) |
| | Situation | | Audio Mood |
| | ... | ... | ... |
| Practical Infomation | DrmCd | CHAR(1) | Data Indicating Whether DRM Has Been Applied |
| | DrmFileName | NVARCHAR2(100) | Path of File Generated Using DRM Packaging |
| | DrmMimeType | VARCHAR2(50) | Mime Type Information of DRM Packaged File |
| | DrmRightOffer | VARCHAR2(100) | DRM RO (Right Offer)-related Information |
| | CEK | VARCHAR2(100) | Key Used for Encrypting Content |
| | DiscountRate | VARCHAR2(100) | Information as to Discount Rate to be Used for Calculating Fees |
| | FreeRate | VARCHAR2(100) | Information as to Free Rate to be Used for Calculating Fees |
| | Coupon | VARCHAR2(100) | Information as to Coupon to be Calculated for Fees |
| | ... | ... | ... |

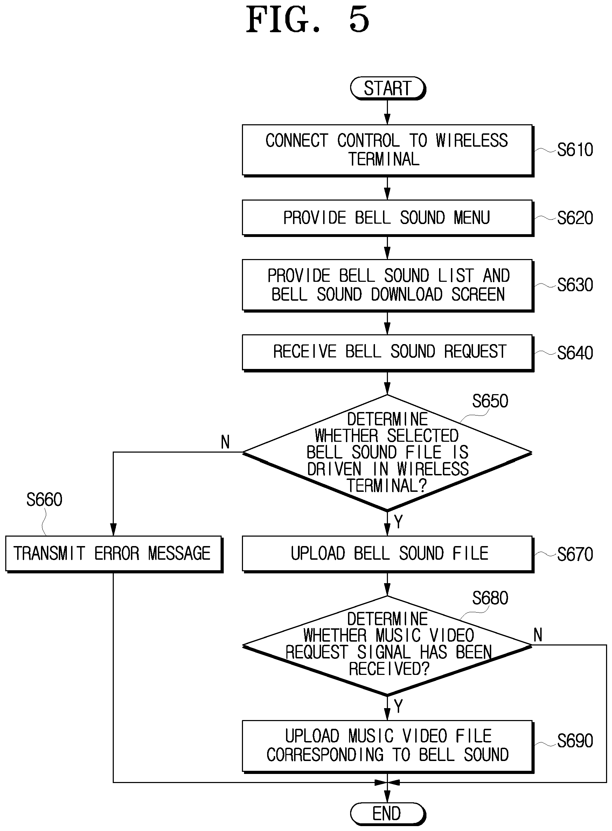

Referring to FIG. 5, the additional attribute defining table 122 defines the second meta **MI2** data of the audio content. In detail, the physical attribute information of the second meta information **MI2** of the audio content includes attribute information of each item depending on the type of audio file. Examples of the types of the audio files include mf files, mal files, and the like providing audio and images related to the audio. The attribute information of each item depending on the type of the audio files includes metadata indicating sizes of the audio files, physical positions of the audio files, supported chord information of the audio, physical positions of short files for pre-viewing the audio, paths of image files related to the audio, and the like.

The type individual information of the audio content includes metadata standards preset with respect to audio-related content. Here, the metadata standards applied to the type individual information of the audio content adopt Music Photo Video (MPV), metadata standards instituted by the Optical Storage Technology Association (OSTA). In particular, the type individual information of the audio content adopts music-related standards of the MPV standards. In detail, the type individual information of the audio content includes metadata on each item, i.e., composer, singer/artist, producer, lyrics, mood of music, and the like.

The practical information of the audio content includes metadata defining attributes related to usage rights of the audio files and metadata indicating information related to usage fees of the audio content. In particular, information for setting usage rights of the audio files includes metadata defining attributes for preventing usages of the audio files without permission. For example, the practical information includes metadata indicating information related to Digital Rights Management (DRM) packaging for protecting copyrights to prevent usages of digital content without permission, MIME information of files generated by DRM packaging of the audio files, encryption information, and the like.

Table 6 below shows an example of the field structure of the additional attribute defining table 122 defining second meta information **MI2** of image content.

**[Table 6]**

| Second Meta Information | Table Field Name | Data Type | Metadata Attribute Value Corresponding to Field |
|---|---|---|---|
| Type General Information | width | DECIMAL(10) | Horizontal Size of Image |
| | height | DECIMAL(10) | Vertical Size of Image |
| | ... | ... | ... |
| Type | Apply MPV Photo Related Standards | | |
| General Information | | | |
| Physical Attribute Information | Jpeg | NVARCHAR2(100) | Physical Position of Jpeg File Type Image File |
| | ipeg_size | DECIMAL(10) | Size of Jpeg Type Image File |
| | jpeg_wap | NVARCHAR2(100) | Physical Position of Jpeg Type Image File Used for WAP |
| | jpeg_wap size | DECIMAL(10) | Size of Jpeg Type Image File |
| | sis | NVARCHAR2(100) | Physical Position sis File Type Image File |
| | sis_size | DECIMAL(10) | Size of sis Type Image File |
| | sis-wap | NVARCHAR2(100) | Physical Position of sis Type Image File Used for WAP |
| | sis_wap_size | DECIMAL(10) | Size of sis Type Image File |
| | bmp | NVARCHAR2(100) | Physical Position of bmp Type Image File |
| | bmp_size | DECIMAL(10) | Size of bmp Type Image File |
| | bmp_wap | NVARCHAR2(100) | Physical Position of bmp Type Image File Used for WAP |
| | bmp_wap_size | DECIMAL(10) | Size of bmp Type Image File |
| | gif | NVARCHAR2(100) | Physical Position of gif Type Image File |
| | gf_size | DECIMAL(10) | Size of gif Type Image File |
| | gip_wap | NVARCHAR2(100) | Physical Position of gif Type Image File Used for WAP |
| | gif_wap_size | DECIMAL(10) | Size of gif Type Image File |
| | ... | ... | ... |
| Practical Information | DrmCd | CHAR(1) | Whether DRM Has Been Applied |
| | DrmFileName | NVARCHAR2(100) | Path of File Generated by Applying DRM Packaging |
| | DrmMimeType | VARCHAR2(50) | Mime Type Information of DRM Packaged File |
| | DrmRightOffer | VARCHAR2(100) | DRM RO(Right Offer)-related Information |
| | CEK | VARCHAR2(100) | Key Used For Encrypting Content |
| | DiscountRate | VARCHAR2(100) | Discount Rate Information to be Used for Calculating Fees |
| | FreeRate | VARCHAR2(100) | Free Rate Information to be Used for Calculating Fees |
| | Coupon | VARCHAR2(100) | Coupon Information to be Used for Calculating Fees |
| | ... | ... | ... |

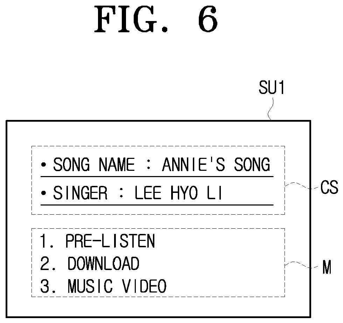

Referring to FIG. 6, the additional attribute defining table 122 defines second meta information **MI2** corresponding to the image content. Here, the image content includes background scene files and the like displayed by the wireless terminal 500 shown in FIG. 1. In detail, the physical attribute information of the second meta information **MI2** of the image content stores attribute information of each item depending on type of image file. Examples of the types of image files include jpeg files, sis files, gif files, bmp files, and the like. The attribute information of each item depending on the type of image file includes metadata indicating sizes of files, physical positions of files, paths of image files, and the like.

Mobile content type information of the image content includes metadata standards preset with respect to image-related content. Here, the metadata standards applied to the mobile content type information of the image content adopt the photo-related standards of the MPV standards.

Practical information of the image content includes metadata defining attributes related to usage rights of image files and metadata indicating information related to usage fees of the image content. In particular, information for setting the usage rights of the image files includes metadata defining attributes for preventing usages of the image files without permission. For example, the practical information of the image content includes meta information indicating information related DRM packaging, Mime information of files generated by DRM packaging the image files, encryption information, and the like.

Tables 7 and 8 below show an example of field structures of the additional attribute defining table 122 defining second meta information MI2 of moving picture content.

**[Table 7]**

| Second Meta Information | Table Field Name | Data Type | Metadata Attribute Value Corresponding to Field |
|---|---|---|---|
| Type General Information | clip_duration | DECIMAL(10) | Moving Picture Screening Time |
| | audio_duration | DECIMAL(10) | Screening Time of Audio Parts of Moving Picture |
| | video_duration | DECIMAL(10) | Screening Time of Video Parts of Moving Picture |
| | copyright | NVARCHAR2(100) | Copyright Information of Moving Picture |
| | title | NVARCHAR2(100) | Moving Picture Title |
| | audio_codec | VARCHAR2(100) | Audio Codec Information |
| | audio_bitrate | DECIMAL(10) | Audio Bitrate Information |
| | audio_sampling_rate | DECIMAL(10) | Audio Sampling Rate Information |
| | video_codec | VARCHAR2(100) | Video Codec Information |
| | video_bitrate | DECIMAL(10) | Video Bitrate Information |
| | video_frame_rate | DECIMAL(10) | Video Frame Rate Information |
| | video_Xsize | DECIMAL(10) | Video Horizontal Screen Size |
| | video_Ysize | DECIMAL(10) | Video Vertical Screen Size |
| Physical Attribute Information | normal | NVARCHAR2(100) | Physical Position Storing File of General Image Quality Moving Picture |
| | normal_size | DECIMAL(10) | File Size of General Image Quality Moving Picture |
| | | | |
| | premium | NVARCHAR2(100) | Physical Position Storing File of Premium Image Quality Moving Pciture |
| | premium_size | DECIMAL(10) | File Size of Premium Image Quality Moving Picture |
| | desc_image | NVARCHAR2(100) | Path of Image File Related to Moving Picture |
| | mci_file | NVARCHAR2(100) | Path of File Including Brief Description of Moving Picture Formed of XML File |
| | ... | ... | ... |

**[Table 8]**

| Second Meta Information | Table Field Name | Data Type | Metadata Attribute Value Correspondi ng to Field |
|---|---|---|---|
| Type Individual Information | episodeTitle | | Episode Title of Moving Picture |
| | startTime | | Broadcastin g Start Time of Moving Picture |
| | duration | | Broadcastin g Duration of Moving Picture |
| | Rating | | Rating of Moving Picture |
| | CastMemberN ame | | Classificat ion of Moving Picture Cast Member (e.g.,: director, producer, actors, and the like) |
| | CastMemberN ame | | Moving Picture Cast Member Name |
| | StationInfo | | Broadcastin g Station Information Providing Moving Picture |
| | Stationinfo | | Broadcastin g Station Name Broadcastin g Moving Picture |
| | Channel | | Channel Number Broadcastin g Moving Picture |
| | Live | | Live |
| | New | | Indicate First Broadcastin g |
| | Repeat | | Indicating Repeat Broadcastin g |
| | encodedMeth od | | Encoding Method |
| | AudioType | | Type of Audio File of Moving Picture |
| | AudioSize | | Size of Audio File |
| | audioLangua ge | | Audio Language Information |
| | ... | ... | ... |
| Practical Information | DrmCd | CHAR(1) | Whether DRM Has Been Applied |
| | DrmFileName | NVARCHAR2(1 00) | Path Information of File Generated by DRM Packaging of Moving Picture |
| | DrmMimeType | VARCHAR2(50 ) | Mime Type Information of DRM Packaging File |
| | DrmRightOff er | VARCHAR2(10 0) | DRM RO-related Information |
| | CEK | VARCHAR2(10 0) | Key Used for Encrypting Content |
| | DiscountRat e | VARCHAR2(10 0) | Discount Rate Information to be Used for Calculating Fees |
| | FreeRate | VARCHAR2(10 0) | Free Rate Information to be Used for Calculating Fees |
| | Coupon | VARCHAR2(10 0) | Coupon Information Applied to Calculate Fees |

Referring to Tables 7 and 8, the additional attribute defining table 122 defines the second meta information **MI2** of the moving picture content. Here, the moving picture content may be a moving picture such as a movie or a music video.

In detail, type general information of the second meta information MI2 of the moving picture content includes metadata defining attributes commonly applied to moving picture items. For example, the type general information of the moving picture content includes metadata indicating screening time, copyrights, titles, codec-related information, and the like of moving pictures.

Physical attribute information of the moving picture content stores attribute information of each item depending on quality of moving pictures. In other words, the physical attribute information of the moving picture content classifies a moving picture into a general image quality moving picture and a premium image quality moving picture so as to indicate attribute information related to a moving picture file corresponding to each image quality. For example, the physical attribute information of the moving picture content includes metadata indicating sizes, storage positions, and the like of the general image quality moving picture and the premium image quality moving picture.
The type individual information of the moving picture content includes metadata standards preset with respect to moving picture related content. Here, the metadata standards applied to the type individual information of the moving picture content adopt broadcasting program related standards of MPV standards. In detail, the type individual information of the moving picture content includes metadata on individual attributes of each moving picture. For example, the type individual information of the moving picture content includes metadata indicating characters, producers, coding related information, language, and the like of the moving picture.

The practical information of the moving picture content is the same as the practical information of the audio content and the image content and thus will not be described herein.

Table 9 below shows an example of field structures of the additional attribute defining table 122 defining second meta information **MI2** of broadcasting content.

**[Table 9]**

| Second Meta Information | Table Field Name | Data Type | Metadata Attribute Value Corresponding to Field |
|---|---|---|---|
| Type General Information | sid | VARCHAR2(100) | Broadcasting Service ID |
| | cid | VARCHAR2(100) | Broadcasting Channel ID |
| | path | NVARCHAR2(100) | Position of File Related to Broadcasting Stream |
| | source | VARCHAR2(100) | Broadcasting Stream Source Information |
| | ... | ... | ... |
| | DrmCd | CHAR(1) | Whether DRM Has Been Applied |
| | DrmFileName | NVARCHAR2(100) | Path of File to Which DRM Packaging is Applied |
| | DrmMimeType | VARCHAR2(50) | Mime Type Information of DRM Packaging File |
| Practical Information | DrmRightOffer | VARCHAR2(100) | DRM RO-related Information |
| | CEK | VARCHAR2(100) | Key Used for Encrypting Content |
| | DiscountRate | VARCHAR2(100) | Discount Rate Information to be Used for Calculating Fees |
| | FreeRate | VARCHAR2(100) | Free Rate Information to be Used for Calculating Fees |
| | Coupon | VARCHAR2(100) | Coupon Information Applied to Calculate Fees |
| | ... | ... | ... |

Referring to Table 9, the type general information of the second meta information **MI2** of the broadcasting content includes attribute information related to a broadcasting stream transmitted from a broadcasting station. For example, the type general information of the broadcasting content includes metadata indicating a broadcasting service ID identifying a broadcasting service provided from each broadcasting station, for example, a cable broadcasting service and a general broadcasting service, a broadcasting channel ID identifying a broadcasting channel, source information of a broadcasting stream indicating a broadcast program, and the like.

The practical information of the second meta information **MI2** of the broadcasting content is similar to the practical information of the audio content and thus will not be described herein.

Table 10 below shows an example of field structures of the additional attribute defining table 122 defining second meta information **MI2** of virtual machine content. Here, the virtual machine content is mobile games or the like.

**[Table 10]**

| Second Meta Information | Table Field Name | Data Type | Metadata Attribute Value Corresponding to Field |
|---|---|---|---|
| Type Individual Information | VMType | | Type Information of Virtual Machine |
| | VMVersion | | Version Information of Virtual Machine |
| | VMName | | Name of Virtual Machine |
| | BrowserType | | Type of Browser to Which Virtual Machine is Applied |
| | BrowserVersion | | Browser Version Information |
| | BrowserName | | Browser Name |
| | color | | Color Information Applied to Virtual Machine (e.g.,: full color, gray scale, and the like) |
| | sound | | Audio Information of Virtual Machine |
| | cpu | | CPU Driving Virtual Machine |
| | memory | | Memory Driving Virtual Machine |
| | ... | ... | ... |
| | PrimaryVersion | VARCHAR2(20) | Primary Version of Virtual Machine |
| | SecondVersion | VARCHAR2(20) | Second Version of Virtual Machine |
| | UpdateVersion | VARCHAR2(20) | Update Version of Virtual Machine |
| | PatchVersion | VARCHAR2(20) | Patch Version of Virtual Machine |
| | DeveloperId | VARCHAR2(40) | Virtual Machine Developer ID |
| | GameType | VARCHAR2(40) | Game Type |
| | TestPasword | VARCHAR2(100) | Test Password of Virtual Machine |
| | MainClassName | VARCHAR2(40) | Main Class Name |
| | MaxThread | DECIMAL(5) | Maximum Number of Threads |
| | SecurityLevelCode | VARCHAR2(20) | Security Level Code |
| Practical Information | SharedDirectory | NVARCHAR2(100) | Shared Directory Name |
| | DeviseId | VARCHAR2(40) | Device ID |
| | LibraryId | VARCHAR2(40) | Library ID |
| | GameDesc | NVARCHAR2(100) | Brief Description of Game |
| | GameDetail | NVARCHAR2(100) | Detailed Description of Game |
| | DrmCd | CHAR(1) | Whether DRM Has Been Applied |
| | DrmFileName | NVARCHAR2(100) | Path of DRM Packaged File |
| | DrmMimeType | VARCHAR2(50) | Mime Type Information of DRM Packaged File |
| | DrmRightOffer | VARCHAR2(100) | DRM RO-related Information |
| | CEK | VARCHAR2(100) | Key Used for Encrypting Content |
| | DiscountRate | VARCHAR2(100) | Discount Rate Information to be Used for Calculating Fees |
| | FreeRate | VARCHAR2(100) | Free Rate Information to be Used for Calculating Fees |
| | Coupon | VARCHAR2(100) | Coupon Information Applied to Calculate Fees |
| | ... | ... | ... |

Referring to Table 10, the type individual information of the second meta information **MI2** of the virtual machine content adopts User Agent Profile standards instituted by the Open Mobile Alliance (OMA). In detail, the type individual information of the virtual machine content includes metadata indicating a type, a current version, software information, hardware-related information, and the like of a virtual machine. Here, the software information of the virtual machine includes browser information, color information, and the like for driving a supported virtual machine, and the hardware-related information of the virtual machine includes minimum processing speed information, memory capacity information, and the like of a central processing unit (CPU) necessary for driving the virtual machine.

The practical information of the second meta information **MI2** of the virtual machine content includes information as to the description, history, usage rights, and usage fees of the virtual machine. For example, the practical information of the virtual machine includes metadata indicating version information, developer information, game type information, and the like of the virtual machine. Here, the information as to the usage rights and usage fees of the virtual machine is similar to the practical information of the audio content and thus will not be described herein.

As described above, the additional attribute defining table 122 defines attributes of various types of meta information depending on driving of the VM. In particular, the additional attribute defining table 122 defines specs of hardware and software the virtual machine requires. Thus, the mobile content management apparatus 100 may detect substantial metadata values of specs of hardware and software each virtual machine requires from the additional attribute value table 123 to determine whether a spec of the wireless terminal 500 shown in FIG. 1 is suitable for the virtual machine selected by a user. As a result, since the user is unable to select a virtual machine that cannot be driven in a wireless terminal, so as to prevent damage, the mobile content management apparatus 100 can improve service quality.

Table 11 below shows an example of field structures of the additional attribute defining table 122 defining second meta information MI2 of text content providing web document type content such as web news.

**[Table 11]**

| Second Meta Information | Table Field Name | Data Type | Metadata Attribute Value Corresponding to Field |
|---|---|---|---|
| | Title | | Text Title |
| Type Individual Information | Link | | URL Information of Site Providing Texts |
| | Descripti on | | Source Information of Texts |
| | language | | Language Information Supported by Texts |
| | copyright | | Text Writer |
| | managingE ditor | | Text Writer Mail Address |
| | webMaster | | Mail Address Receiving Opinions Related to Texts |
| | pubDate | | Published Date of Texts |
| | category | | URL Information of Texts |
| | ... | ... | ... |
| | DrmCd | CHAR(1) | Whether DRM Has Been Applied |
| Practical Information | DrmFileNa me | NVARCHAR2(1 00) | Path of DRM Packaged File |
| | DrmMimeTy pe | VARCHAR2(50 ) | Mime Type Information of DRM Packaged File |
| | DrmRightO ffer | VARCHAR2(10 0) | DRM RO-related Information |
| | CEK | VARCHAR2(10 0) | Key Used for Encrypting Content |
| | DiscountR ate | VARCHAR2(10 0) | Discount Rate Information to be Used for Calculating Fees |
| | FreeRate | VARCHAR2(10 0) | Free Rate Information to be Used for Calculating Fees |
| | Coupon | VARCHAR2(10 0) | Coupon Information Applied to Calculate Fees |
| | ... | ... | ... |

Referring to Table 11, the type individual information of the second meta information **MI2** of the text content adopts Resource Description Framework (RDF) Site Summary (RSS) standards instituted by the World Wide Web Consortium (W3C). In detail, the type individual information of the text content includes individual attribute-related metadata related to texts, for example, metadata indicating text titles, text source information, language information of the texts, text writers, text addresses, and the like.

The practical information of the second meta information **MI2** of the text content is similar to the practical information of the audio contents and thus will not be described herein.

The additional attribute value table 123 generates a record for storing substantial data in fields defined by the additional attribute defining table 122. In other words, the additional attribute value table 123 stores a metadata attribute value of each item to constitute mobile content.

Table 12 below shows an example of the field structure of the additional attribute value table 123.

**[Table 12]**

| Second Meta Information | Table Field Name | Data Type | Metadata Attribute Value Corresponding to Field |
|---|---|---|---|
| Type General Information | sContentId | VARCHART2(24) | Content ID |
| | sContentType | VARCHART2(24) | Content Type |
| | SItemName | NVARCHART2(50) | Item Name |
| | sVal | NVARCHART2(200) | Item Value (e.g.,: Singer Name and the like) |
| | sLangCode | VARCHART2(20) | Language Code of Item |
| | ··· | ··· | ··· |

In the present embodiment, the field structures of the additional attribute value table 123 are similar to the field structures of the additional attribute defining table 122. Thus, fields of the field structures of the additional attribute value table 122 shown in FIG. 10 which vary with type of content of the additional attribute defining table 122 shown in Tables 4 through 11 are omitted and thus will not be described herein.
Referring to Table 12, the additional attribute value table 123 stores the type general information of the second meta information **MI2.** The additional attribute value table 123 stores a metadata attribute defining attribute information provided by the mobile content, i.e., an individual attribute of each item.

A metadata attribute value of audio content stored in the additional attribute table 123 will now be described as an example. If a song of a specific singer including MP3 files is registered as an item of audio content, "MP3" is stored in a record of a field "sContentType," and a name of the specific singer is stored in a record of a field "sVal."

The field "sContentType" indicating a content category ID of the additional attribute value table 123 can distinguish each record of the additional attribute value table 123 and thus be set as a basic key of the additional attribute value table 123 together with other attributes. For reference, the field "sContentType" of the content general information table 121 may be set as a foreign key (FK) referring to the metadata attribute values stored in the additional attribute defining table 122 and the additional attribute value table 123.

The content type information table 124 stores information as to type of mobile content. Table 13 below shows an example of the field structure of the content type information table 124.

**[Table 13]**

| Table Field Name | Data Type | Metadata Attribute Value Corresponding to Field |
|---|---|---|
| sContentType | VARCHAR2(24) | Content Type |
| sDesc | NVARCHAR2(100) | Brief Description of Content Type |
| sLangCode | VARCHAR2(20) | Content Language Code |
| ··· | ··· | ··· |

Referring to Table 13, the content type information table 124 stores detailed description of types of mobile content.

The statistical information table 125 and the mapping information table 126 store third meta information **MI3.** In other words, the statistical information table 125 stores statistical information of the third meta information **MI3**, and the mapping information table 126 stores content-related information of the third meta information **MI3.**

The third meta information MI3 includes content-related information including information as to connection relationships among different types of mobile content and statistical data on mobile content. Here, the statistical information is stored in the statistical information table 125, and the content-related information is stored in the mapping information table 126.

Table 14 below shows an example of field structures of the statistical information table 125, and Table 15 below shows an example of the field structures of the mapping information table 126.

**[Table 14]**

| Table Field Name | Data Type | Metadata Attribute Value Corresponding to Field |
|---|---|---|
| sContentId | VARCHAR2(24) | Content ID |
| iRecommendCnt | DECIMAL(10) | Number of Times Content is Recommended |
| iDownloadCnt | DECIMAL(10) | Number of Times Content is Downloaded |
| iHitCnt | DECIMAL(10) | Number of Times Content is |
| | | Accessed |
| ··· | ··· | ··· |

**[Table 15]**

| Table Field Name | Data Type | Metadata Attribute Value Corresponding to Field |
|---|---|---|
| sContentId | VARCHAR2(24) | Content ID |
| sRelationId | VARCHAR2(24) | ID of related service page |
| iWeight | DECIMAL(5) | Weight |
| ··· | ··· | ··· |

Referring to Tables 14 and 15, the statistical information stored in the information table 126 includes metadata indicating numbers of times each item is recommended, downloaded, and accessed. Thus, the mobile content management apparatus 100 can calculate statistical data under various conditions related to mobile content using the information table 126.

The content-related information stored in the mapping information table 126 includes metadata indicating IDs of items of different types of mobile content related to each item and the like. Thus, the mobile content management apparatus 100 can provide a service for linking different types of mobile content using the mapping information table 126.

As described above, the data storage 120 stores detailed content information related to mobile content. Thus, the mobile content management apparatus 100 can calculate various types of statistical information related to the mobile content and provide specified mobile content services suitable for the individual likings of a user of the wireless terminal 500, rather than uniform mobile content services.

Referring to FIG. 1 again, the meta information detector 130 generates content-related information with reference to the content general information table 121 so as to provide a service for linking different types of related mobile content. The meta information detector 130 provides the content-related information to the data storage 120, and the data storage 120 stores the content-related information in the mapping information table 126 shown in FIG. 2.

The meta information detector 130 calculates statistical information of various conditions related to the mobile content with reference to the first through third meta information stored in the data storage 120.

For example, in a case where a specific user desires to output audio in English during offering of moving picture content, the meta information detector 130 outputs the audio in English with reference to audio language information of corresponding mobile content stored in the field "audioLanguage" of the additional attribute defining table shown in Table 7.,

As another example, during calculating of statistical data of audio content, the meta information detector 130 may calculate orders of downloading of ring tones having a replay time of 4 minutes using the additional attribute value table 123 shown in FIG. 2 and the statistical information table 126 shown in FIG. 2. In other words, the meta information detector 130 calculates data corresponding to conditions of calculated statistical data with reference to fields of Table 4 corresponding to audio content of the additional attribute value table 123 shown in FIG. 2 and the statistical information table 125 shown in FIG. 2.

As described above, the mobile content management apparatus 100 may store various types of metadata in the data storage 120 to calculate various types of statistical data and thus suggests a direction of developing various types of mobile content coinciding with requests of the user.

The input unit 140 generates a predetermined command according to a manipulation of the user of the mobile content management apparatus 100 and provides the predetermined command to the controller 150. The input unit 140 registers item files of mobile content or generates a command to input metadata related to the mobile content and then provides the item files or the command to the controller 150.

The controller 150 controls the communicator 110, the data storage 120, the meta information detector 130, and the display 160 according to the command received from the input unit 140 and stores metadata provided by the content providing apparatus 300 or the input unit 140 in the data storage 120. In other words, the controller 150 provides a user interface for registering the mobile content and inputting the metadata corresponding to the mobile content.

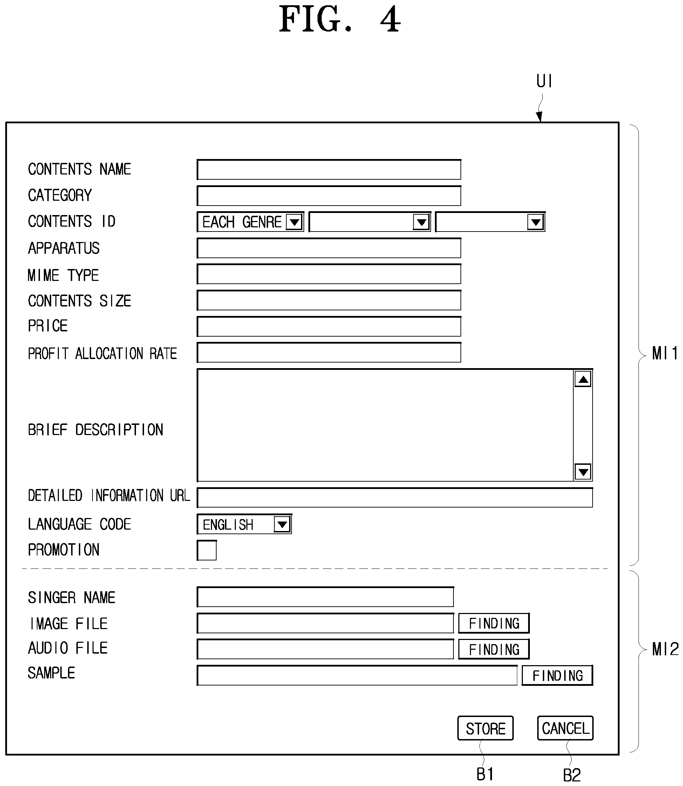

FIG. 4 is a view illustrating a user interface screen provided by the mobile content management apparatus 100 shown in FIG. 1 according to an embodiment of the present invention, i.e., a user interface screen registering audio content.

Referring to FIGS. 1 and 4, a user interface **UI** provides an interface inputting first and second meta information **MI1** and **MI2.**

In detail, input items of the user interface **UI** related to the first meta information **MI1** include an item inputting an audio content name, an item selecting a category of audio content, an item inputting an ID of the audio content, an item inputting usage price of the audio content, an item inputting an allocation rate of the usage of the audio content, an item inputting a brief description of the audio content, an item inputting an Internet address storing detailed information of the audio content, an item selecting a type of language supported by the audio content, and an item indicating a promotion selecting whether a service for linking different types of audio content, related to the current audio content, is provided.

Input items of the second meta information **MI2** of the user interface **UI** include an item inputting a name of a singer or player of the audio content, an item inputting a path through which image files related to the audio content are stored, an item inputting a path through which audio files of the audio content are stored, and an item inputting a path through which sample files of the audio content are stored to preview a portion of the audio content.

The user interface **UI** includes a storage button **B1** storing data input into each item in the data storage 120 and a cancel button **B2** canceling a registration of the input data. If the storage button **B1** is selected, the controller 150 stores the data input into each item in the data storage 120. If the cancel button **B2** is selected, the controller 150 initializes each item.

The controller 150 provides mobile content according to a request of the wireless terminal 500. In particular, the controller 150 provides a mobile content menu for providing mobile content to the wireless terminal 500. A process of providing mobile content and a description of the mobile content in the mobile content management apparatus 100 will be described in detail later with reference to FIGS. 5 and 6.

The display 160 displays predetermined data under control of the controller 150. In other words, in a case where the mobile content is registered through the input unit 140, the display 160 displays the user interface **UI.**

FIG. 5 is a flowchart of a process of providing mobile content according to an embodiment of the present invention, and FIG. 6 is a view illustrating a ringtone download menu provided by the mobile content management apparatus 100 shown in FIG. 1 according to an embodiment of the present invention.

FIGS. 5 and 6 show audio content providing ringtone files of mobile content of the wireless terminal 500

Referring to FIGS. 1 and 5, in operation S610, the wireless terminal 500 is connected to the wireless communication network 400 so as to connect the controller 150 to the wireless terminal 500

In operation S620, the controller 150 provides a ringtone menu for selecting a ringtone category to the wireless terminal 500 through the wireless communication network 400 according to a request of the wireless terminal 500. Thus, the wireless terminal 500 displays the ringtone menu.

If the wireless terminal 500 selects a specific category of the ringtone menu, the controller 150 provides a ringtone list corresponding to the selected category to the wireless terminal 500 through the wireless communication network 400. If the wireless terminal 500 selects a specific ringtone on the ringtone list, the controller 150 provides a ringtone download screen **SUI** through which the selected ringtone is downloaded in operation 630 as shown in FIG. 6. Thus, the wireless terminal 500 displays the ringtone download screen SUI.

Referring to Fig. 6, the ringtone download screen **SUI** displays ringtone basic information **CS** indicating a singer or player corresponding to a song name of the selected ringtone and a selection menu **M** requesting data related to the ringtone.

The selection menu **M** includes a preview menu for previewing the selected ringtone, a download menu for downloading the selected ringtone, and a music video menu for requesting a music video corresponding to the ringtone.

Referring to FIGS. 1 and 5 again, the controller 150 receives a ringtone request signal for requesting uploading of a ringtone file from the wireless terminal 500 according to a selection of the download menu of the selection menu **M** by a user in operation S640.

In operation S650, the controller 150 determines whether the selected ringtone file can be driven in the wireless terminal 500 of the user or is suitable for the spec of the wireless terminal 500, with reference to metadata of ringtone files stored in the additional attribute defining table 122 of FIG. 2, the metadata corresponding to the selected ringtone file, for example, size information, supported chord information, and the like of the selected ringtone file.

If it is determined in operation S650 that the selected ringtone is not suitable for the spec of the wireless terminal 500, the controller 150 generates an error message and provides the error message to the wireless terminal 500. For example, in a case where the selected ringtone supports 64 chords but the wireless terminal 500 supports 16 chords, the selected ringtone is not suitable for the wireless terminal 500.

If it is determined in operation S650 that the selected ringtone is suitable for the spec of the wireless terminal 500, the controller 150 transmits a file of the selected ringtone through the wireless communication network 400 to the wireless terminal 500 in operation S670. Here, the ringtone file provided by the wireless terminal 500 may be a file stored in the mobile content management apparatus 100 or a file stored in the content providing apparatus 300. If the ringtone file is stored in the content providing apparatus 300, the mobile content management apparatus 100 may receive the ringtone file from the content providing apparatus 300 and provide the ringtone to the wireless terminal 500 or the content providing apparatus 300 may directly provide the ringtone file to the wireless terminal 500.

In operation S680, the controller 150 determines whether a music video request signal has been received from the wireless terminal 500, according to a selection of the video menu of the selection menu **M** of FIG. 6 by the manipulation of the user.

If it is determined in operation S680 that the music video request signal has not been received, the controller 150 maintains a current state.

If it is determined in operation S680 that the music video request signal has been received, the controller 150 provides a music video file corresponding to the selected ringtone to the wireless terminal 500 in operation S690. Here, the controller 150 may provide a moving picture content menu providing a music video to the wireless terminal 500 to provide a music video file or may immediately provide the music video file without providing the moving picture content menu.

Like the ringtone file, the music video file may be a file stored in the mobile content management apparatus 100 or a file stored in the content providing apparatus 300. The method of providing the music video file depending on a storage position is equivalent to the method of providing the ringtone file.

As described above, the mobile content management apparatus 100 can grasp restrictions on mobile content, information as to different types of related mobile content, and the like using the metadata stored in the data storage 120 and thus improve quality of mobile content services and convenience of users.

As described above, according to the present invention, a mobile content management apparatus can provide metadata complying with general metadata standards established for types of mobile content and metadata for linking mobile content with one another, calculating statistical data, and providing specified services depending on requests of users.

Thus, the mobile content management apparatus can provide mobile content using various methods according to the requests of the users and thus improve service quality.

Also, the mobile content management apparatus can link different types of related mobile content and thus improve profit creation of mobile content businesses and the convenience of the users.

In addition, the mobile content management apparatus can calculate statistical data of various conditions related to the mobile content and thus suggest a direction of developing mobile content services.

Moreover, the mobile content management apparatus can prevent a user from downloading mobile content unsuitable for the specs of a corresponding wireless terminal and thus prevent damage caused by a selection of mobile content that cannot be driven in the wireless terminal by the user.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A mobile content management apparatus comprising:
a data storage (120) for storing first meta information (MI1) comprising metadata defining general attributes of mobile content,
a controller (150) for providing a user interface for inputting metadata for forming first through third meta information (MI1,MI2,MI3) so as to register the mobile content, and for storing the metadata input through the user interface in the data storage (120); and wherein the data storage (120) is adapted to store second meta information (MI2) comprising metadata defining unique attributes of each of the different types of mobile content, and third meta information (MI3) comprising metadata related to statistical information on the mobile content and metadata indicating linkage relationships among the different types of mobile content;
wherein the second meta information (MI2) comprises:
type general information comprising metadata indicating general attributes according to type of the mobile content;
physical attribute information comprising metadata indicating physical attributes of the mobile content;
type individual information comprising metadata indicating unique attributes according to the type of the mobile content; and
practical information comprising information as to protection, encryption, and usage fees of the mobile content.

2. The mobile content management apparatus of claim 1, wherein the first meta information (MI1) comprises content ID (identifier) information for identifying each item of mobile content, name information of the mobile content, type information of the mobile content, category information of the mobile content, language information indicating a language supported in the mobile content, and promotion information for linking the mobile content to different types of related mobile content.

3. The mobile content management apparatus of claim 1, wherein the first meta information (MI1) comprises metadata defining general attributes of Internet content established by Dublin Core.

4. The mobile content management apparatus of claim 1, wherein the type general information comprises information as to a name of each item constituting the mobile content, a brief description of the each item, a type of data input as an input value of the each item, and a priority of the each item.

5. The mobile content management apparatus of claim 1 or claim 4, wherein the physical attribute information comprises the type of the mobile content, sizes of the mobile content, and physical position storing the mobile content.

6. The mobile content management apparatus of any one of claims 1, 4 and 5, wherein the mobile content comprises at least one of:
audio content providing audio files;
moving picture content providing moving picture files;
image content providing image files;
virtual machine content providing execution files operating in a VM (virtual machine);
broadcasting content providing digital broadcasting services; and
text content providing Internet text files.

7. The mobile content management apparatus of claim 6, wherein the type individual information corresponding to the audio content comprises information as to composers, singers, producers, lyrics, and moods of the audio content.

8. The mobile content management apparatus of claim 7, wherein the type individual information corresponding to the audio content comprises metadata defined in MPV (Music Photo Video) standards that are metadata standards established by the Optical Storage Technology Association (OSTA).

9. The mobile content management apparatus of claim 6, wherein the type general information corresponding to the image content comprises MPV standards.

10. The mobile content management apparatus of any one of claims 6 to 9, wherein the physical attribute information corresponding to the moving picture content is classified by the quality of the moving picture files.

11. The mobile content management apparatus of any one of claims 6 to 10, wherein the type individual information corresponding to the moving picture content comprises information as to characters and producers of moving pictures, coding-related information of the moving pictures, and information indicating languages of the moving pictures.

12. The mobile content management apparatus of claim 11, wherein the type individual information corresponding to the moving picture content comprises metadata defined by MPV standards.

13. The mobile content management apparatus of any one of claims 6 to 12, wherein type general information corresponding to the broadcasting content comprises attribute information related to a broadcasting stream transmitted from a broadcasting station.

14. The mobile content management apparatus of any one of claims 6 to 13, wherein the type individual information corresponding to the VM content comprises information as to a type and a version of the VM and specs of hardware and software the VM requires.

15. The mobile content management apparatus of any one of claims 6 to 13, wherein the type individual information corresponding to the VM content comprise metadata defined by User Agent Profile standards established by OMA (Open Mobile Alliance).

16. The mobile content management apparatus of any one of claims 6 to 13, wherein type individual information corresponding to the text content comprises information as to titles and sources of Internet titles and languages that can be supported in the Internet texts.

17. The mobile content management apparatus of claim 16, wherein the type individual information corresponding to the text content comprises metadata defined by RSS (RDF (Resource Description Framework) Site Summary) standards established by the W3C (World Wide Web Consortium).

18. The mobile content management apparatus of any preceding claim, wherein the third meta information (MI3) comprises meta information indicating numbers of times the mobile content are downloaded and accessed.

19. The mobile content management apparatus of any preceding claim, further comprising a communicator (110) for transmitting metadata corresponding to the mobile content and the mobile content through a wireless communication network (200) to a wireless terminal (500).

20. The mobile content management apparatus of any preceding claim, wherein the data storage (120) further comprises indicating additional information added according to a request of a user of the mobile content.

## Patentansprüche

1. Vorrichtung zur Verwaltung von mobilen Inhalten, umfassend:
einen Datenspeicher (120) zum Speichern von ersten Metainformationen (MI1), die Metadaten umfassen, die allgemeine Attribute von mobilen Inhalten definieren,
eine Steuerungseinrichtung (150) zum Bereitstellen einer Benutzerschnittstelle zur Eingabe von Metadaten zum Bilden von ersten bis dritten Metainformationen (MI1, MI2, MI3), um die mobilen Inhalte aufzuzeichnen, und zum Speichern der Metadaten, die durch die Benutzerschnittstelle in den Datenspeicher (120) eingegeben wurden; und
wobei der Datenspeicher (120) dafür geeignet ist, zweite Metainformationen (MI2), die Metadaten umfassen, die einzigartige Attribute von jedem der verschiedenen Typen von mobilen Inhalten definieren, und dritte Metainformationen (MI3), die Metadaten, die mit statistischen Informationen über die mobilen Inhalte in Zusammenhang stehen, und Metadaten, die Verknüpfungsbeziehungen unter den verschiedenen Typen von mobilen Inhalten anzeigen, umfassen, zu speichern;
wobei die zweiten Metainformationen (MI2) umfassen:
allgemeine Typinformationen, umfassend Metadaten, die allgemeine Attribute gemäß dem Typ der mobilen Inhalte anzeigen;
Informationen zu den physischen Attributen, umfassend Metadaten, welche physische Attribute der mobilen Inhalte anzeigen;
individuelle Typinformationen, umfassend Metadaten, die einzigartige Attribute gemäß dem Typ der mobilen Inhalte anzeigen; und
praktische Informationen, umfassend Informationen zum Schutz, zur Verschlüsselung und zu den Benutzungsgebühren der mobilen Inhalte.

2. Vorrichtung zur Verwaltung von mobilen Inhalten nach Anspruch 1, wobei die ersten Metainformationen (MI1) Inhalts-ID-(Identifikator)-Informationen zum Identifizieren jedes Gegenstands von mobilen Inhalten, Namensinformationen zu den mobilen Inhalten, Typinformationen zu den mobilen Inhalten, Kategorieinformationen zu den mobilen Inhalten, Sprachinformationen, die eine in den mobilen Inhalten unterstützte Sprache anzeigen, und Werbeinformationen zum Verknüpfen der mobilen Inhalte mit verschiedenen Typen von verwandten mobilen Inhalten umfassen.

3. Vorrichtung zur Verwaltung von mobilen Inhalten nach Anspruch 1, wobei die ersten Metainformationen (MI1) Metadaten umfassen, die allgemeine Attribute von Internetinhalten definieren, die mittels Dublin Core erstellt wurden.

4. Vorrichtung zur Verwaltung von mobilen Inhalten nach Anspruch 1, wobei die allgemeinen Typinformationen Informationen zu einem Namen jedes Gegenstands, der die mobilen Inhalte bildet, eine kurze Beschreibung jedes Gegenstands, einen Typ der Dateneingabe als Eingabewert jedes Gegenstands und eine Priorität jedes Gegenstands umfassen.

5. Vorrichtung zur Verwaltung von mobilen Inhalten nach Anspruch 1 oder 4, wobei die Informationen zu den physischen Attributen den Typ der mobilen Inhalte, die Größen der mobilen Inhalte und die physische Position, an der die mobilen Inhalte gespeichert sind, umfassen.

6. Vorrichtung zur Verwaltung von mobilen Inhalten nach einem der Ansprüche 1, 4 und 5, wobei die mobilen Inhalte wenigstens eines von Folgendem umfassen:
Audioinhalte, die Audiodateien bereitstellen;
Bewegtbild-Inhalte, die Bewegtbild-Dateien bereitstellen;
Bildinhalte, die Bilddateien bereitstellen;
Inhalte zu virtuellen Maschinen, die Ausführungsdateien bereitstellen, die in einer VM (virtuellen Maschine) betrieben werden;
Rundfunkinhalte, die digitale Rundfunkdienste bereitstellen; und
Textinhalte, die Internet-Textdateien bereitstellen.

7. Vorrichtung zur Verwaltung von mobilen Inhalten nach Anspruch 6, wobei die individuellen Typinformationen, die den Audioinhalten entsprechen, Informationen zu Komponisten, Sängern, Produzenten, Texten und Melodien der Audioinhalte umfassen.

8. Vorrichtung zur Verwaltung von mobilen Inhalten nach Anspruch 7, wobei die individuellen Typinformationen, die den Audioinhalten entsprechen, Metadaten umfassen, die in MPV-(Musik-Photo-Video)-Standards definiert sind, bei denen es sich um Metadaten-Standards handelt, die durch die Optical Storage Technology Association (OSTA) erstellt wurden.

9. Vorrichtung zur Verwaltung von mobilen Inhalten nach Anspruch 6, wobei die allgemeinen Typinformationen, die den Bildinhalten entsprechen, MPV-Standards umfassen.

10. Vorrichtung zur Verwaltung von mobilen Inhalten nach einem der Ansprüche 6 bis 9, wobei die Informationen zu den physischen Attributen, die den Bewegtbild-Inhalten entsprechen, durch die Qualität der Bewegtbild-Dateien klassifiziert werden.

11. Vorrichtung zur Verwaltung von mobilen Inhalten nach einem der Ansprüche 6 bis 10, wobei die individuellen Typinformationen, die den Bewegtbild-Inhalten entsprechen, Informationen zu den Charakteren und Produzenten der Bewegtbilder, Informationen bezüglich der Codierung der Bewegtbilder und Informationen, welche die Sprachen der Bewegtbilder anzeigen, umfassen.

12. Vorrichtung zur Verwaltung von mobilen Inhalten nach Anspruch 11, wobei die individuellen Typinformationen, die den Bewegtbild-Inhalten entsprechen, Metadaten umfassen, die durch MPV-Standards definiert werden.

13. Vorrichtung zur Verwaltung von mobilen Inhalten nach einem der Ansprüche 6 bis 12, wobei die allgemeinen Typinformationen, die den Rundfunkinhalten entsprechen, Attributinformationen im Zusammenhang mit einem Rundfunk-Strom umfassen, der von einer Rundfunkstation gesendet wird.

14. Vorrichtung zur Verwaltung von mobilen Inhalten nach einem der Ansprüche 6 bis 13, wobei die individuellen Typinformationen, die den VM-Inhalten entsprechen, Informationen zu einem Typ und einer Version der VM und zu Spezifikationen der Hardware und der Software, welche die VM benötigt, umfassen.

15. Vorrichtung zur Verwaltung von mobilen Inhalten nach einem der Ansprüche 6 bis 13, wobei die individuellen Typinformationen, die den VM-Inhalten entsprechen, Metadaten umfassen, die durch User Agent Profile-Standards definiert sind, die durch die OMA (Open Mobile Alliance) erstellt wurden.

16. Vorrichtung zur Verwaltung von mobilen Inhalten nach einem der Ansprüche 6 bis 13, wobei die individuellen Typinformationen, die den Textinhalten entsprechen, Informationen zu den Titeln und Quellen von Internettiteln und zu den Sprachen, die in den Internettexten unterstützt werden können, umfassen.

17. Vorrichtung zur Verwaltung von mobilen Inhalten nach Anspruch 16, wobei die individuellen Typinformationen, die den Textinhalten entsprechen, Metadaten umfassen, die durch RSS(RDF (Resource Description Framework) Site Summary)-Standards definiert werden, die durch das W3C (World Wide Web Consortium) erstellt wurden.

18. Vorrichtung zur Verwaltung von mobilen Inhalten nach einem der vorhergehenden Ansprüche, wobei die dritten Metainformationen (MI3) Metainformationen umfassen, welche die Häufigkeit angeben, mit der die mobilen Inhalte heruntergeladen werden und auf sie zugegriffen wird.

19. Vorrichtung zur Verwaltung von mobilen Inhalten nach einem der vorhergehenden Ansprüche, ferner umfassend einen Fernmelder (110) zum Senden der den mobilen Inhalten entsprechenden Metadaten und der mobilen Inhalte über ein drahtloses Kommunikationsnetz (200) an ein drahtloses Endgerät (500).

20. Vorrichtung zur Verwaltung von mobilen Inhalten nach einem der vorhergehenden Ansprüche, wobei der Datenspeicher (120) ferner die Anzeige von zusätzlichen Informationen umfasst, die gemäß einer Anfrage eines Benutzers der mobilen Inhalte hinzugefügt werden.

## Revendications

1. Appareil de gestion de contenu mobile comprenant :
un stockage de données (120) destiné à stocker des premières méta-informations (MI1) comprenant des métadonnées définissant des attributs généraux de contenu mobile,
un contrôleur (150) destiné à fournir une interface utilisateur pour entrer des métadonnées afin de former des premières à troisièmes méta-informations (MI1, MI2, MI3) de manière à enregistrer le contenu mobile, et à stocker l'entrée de métadonnées par le biais de l'interface utilisateur dans le stockage de données (120) ; et
dans lequel le stockage de données (120) est adapté pour stocker des deuxièmes méta-informations (MI2) comprenant des métadonnées définissant des attributs uniques de chacun des différents types de contenu mobile, et des troisièmes méta-informations (MI3) comprenant des métadonnées relatives à des informations statistiques sur le contenu mobile et des métadonnées indiquant des relations de lien parmi les différents types de contenu mobile ;
dans lequel les deuxièmes méta-informations (MI2) comprennent :
des informations générales de type comprenant des métadonnées indiquant des attributs généraux en fonction du type du contenu mobile ;
des informations d'attribut physique comprenant des métadonnées indiquant des attributs physiques du contenu mobile ;
des informations individuelles de type comprenant des métadonnées indiquant des attributs uniques en fonction du type du contenu mobile ; et
des informations pratiques comprenant des informations sur la protection, le cryptage et les frais d'utilisation du contenu mobile.

2. Appareil de gestion de contenu mobile de la revendication 1, dans lequel les premières méta-informations (MI1) comprennent des informations d'ID (identifiant) de contenu destinées à identifier chaque élément de contenu mobile, des informations de nom du contenu mobile, des informations de type du contenu mobile, des informations de catégorie du contenu mobile, des informations de langue indiquant une langue supportée dans le contenu mobile, et des informations de promotion destinées à lier le contenu mobile à différents types de contenu mobile associé.

3. Appareil de gestion de contenu mobile de la revendication 1, dans lequel les premières méta-informations (MI1) comprennent des métadonnées définissant des attributs généraux de contenu Internet établies par Dublin Core.

4. Appareil de gestion de contenu mobile de la revendication 1, dans lequel les informations générales de type comprennent des informations sur un nom de chaque élément constituant le contenu mobile, une brève description de chaque élément, un type d'entrée de données servant de valeur d'entrée de chaque élément, et une priorité de chaque élément.

5. Appareil de gestion de contenu mobile de la revendication 1 ou la revendication 4, dans lequel les informations d'attribut physique comprennent le type du contenu mobile, des tailles du contenu mobile, et une position physique stockant le contenu mobile.

6. Appareil de gestion de contenu mobile de l'une quelconque des revendications 1, 4 et 5, dans lequel le contenu mobile comprend au moins un élément parmi :
des fichiers audio fournissant du contenu audio ;
des fichiers de film fournissant du contenu filmique ;
des fichiers d'image fournissant du contenu d'image ;
des fichiers d'exécution fournissant du contenu de machine virtuelle fonctionnant dans une VM (machine virtuelle) ;
des services de diffusion numérique fournissant du contenu de diffusion ; et
des fichiers textes Internet fournissant du contenu textuel.

7. Appareil de gestion de contenu mobile de la revendication 6, dans lequel les informations individuelles de type correspondant au contenu audio comprennent des informations sur des compositeurs, des chanteurs, des producteurs, des paroles et des ambiances du contenu audio.

8. Appareil de gestion de contenu mobile de la revendication 7, dans lequel les informations individuelles de type correspondant au contenu audio comprennent des métadonnées définies dans des normes MPV (Music Photo Video) qui sont des normes de métadonnées établies par l'Optical Storage Technology Association (OSTA).

9. Appareil de gestion de contenu mobile de la revendication 6, dans lequel les informations générales de type correspondant au contenu d'image comprennent des normes MPV.

10. Appareil de gestion de contenu mobile de l'une quelconque des revendications 6 à 9, dans lequel les informations d'attribut physique correspondant au contenu filmique sont classées par la qualité des fichiers de film.

11. Appareil de gestion de contenu mobile de l'une quelconque des revendications 6 à 10, dans lequel les informations individuelles de type correspondant au contenu filmique comprennent des informations sur des personnages et des producteurs de films, des informations relatives au codage des films, et des informations indiquant des langues des films.

12. Appareil de gestion de contenu mobile de la revendication 11, dans lequel les informations individuelles de type correspondant au contenu filmique comprennent des métadonnées définies par des normes MPV.

13. Appareil de gestion de contenu mobile de l'une quelconque des revendications 6 à 12, dans lequel les informations générales de type correspondant au contenu de diffusion comprennent des informations d'attribut relatives à un flux de diffusion transmis depuis une station de diffusion.

14. Appareil de gestion de contenu mobile de l'une quelconque des revendications 6 à 13, dans lequel les informations individuelles de type correspondant au contenu VM comprennent des informations sur un type et une version de la VM et des spécifications matérielles et logicielles dont a besoin la VM.

15. Appareil de gestion de contenu mobile de l'une quelconque des revendications 6 à 13, dans lequel les informations individuelles de type correspondant au contenu VM comprennent des métadonnées définies par des normes User Agent Profile établies par l'OMA (Open Mobile Alliance).

16. Appareil de gestion de contenu mobile de l'une quelconque des revendications 6 à 13, dans lequel les informations individuelles de type correspondant au contenu textuel comprennent des informations sur des titres et des sources de titres Internet et des langues qui peuvent être supportées dans les textes Internet.

17. Appareil de gestion de contenu mobile de la revendication 16, dans lequel les informations individuelles de type correspondant au contenu textuel comprennent des métadonnées définies par des normes RSS (RDF (Resource Description Framework) Site Summary) établies par le W3C (World Wide Web Consortium).

18. Appareil de gestion de contenu mobile d'une quelconque revendication précédente, dans lequel les troisièmes méta-informations (MI3) comprennent des méta-informations indiquant des nombres de fois qu'on télécharge et qu'on accède au contenu mobile.

19. Appareil de gestion de contenu mobile d'une quelconque revendication précédente, comprenant en outre un dispositif de communication (110) destiné à transmettre des métadonnées correspondant au contenu mobile et le contenu mobile par le biais d'un réseau de communication sans fil (200) à un terminal sans fil (500).

20. Appareil de gestion de contenu mobile d'une quelconque revendication précédente, dans lequel le stockage de données (120) comprend en outre l'indication d'informations supplémentaires ajoutées en fonction d'une requête d'un utilisateur du contenu mobile.
